# EUROPÄISCHE PATENTANMELDUNG

(11) **EP 1 378 726 A1**
(43) Veröffentlichungstag der Anmeldung: **07.01.2004**
(21) Anmeldenummer: 03014228.5
(22) Anmeldetag: 25.06.2003
(51) Int. Cl.: G01F 1/08, G01F 1/06, G01F 15/14

(54) **Einstrahlzähler für Flüssigkeiten**

(30) Priorität: 03.07.2002 DE 10229794
(71) Anmelder: Invensys Metering Systems GmbH Ludwigshafen, 67063 Ludwigshafen (DE)
(72) Erfinder: Lang, Gerhard, 67134 Birkenheide (DE)
(74) Vertreter: Patentanwälte Möll und Bitterich

(57) **Zusammenfassung**

Gegenstand der Erfindung sind Einstrahlzähler für Flüssigkeiten. Deren Gehäuse (10) umfasst einen Einlassstutzen (15), einen Einlasskanal (20) vom Einlassstutzen (15) in eine Messkammer (11), einen Auslassstutzen (16) und einen Auslasskanal (30) aus der Messkammer (11) zum Auslassstutzen (16). Die Anschlüsse von Einlass- und Auslassstutzen (15, 16) sitzen auf der Mittellängsachse (YY) des Gehäuses (10). Der Einlasskanal (20) lenkt die Messflüssigkeit tangential auf ein Flügelrad (1). Der Einlasskanal (20) ist derart S-förmig geformt, dass nur umgelenkte und dadurch gerichtete Flüssigkeit das Flügelrad (1) nur mit einem schmalen, exakt gerichteten Strömungsprofil (2) im Bereich des äußeren Endes der Flügelpaletten trifft.

## Beschreibung

Die Erfindung betrifft Einstrahlzähter für Flüssigkeiten gemäß dem Oberbegriff des Anspruchs 1.

Verbrauchszähler für Flüssigkeiten umfassen üblicherweise ein Gehäuse, in dem sich eine Messkammer von im wesentlichen zylindrischer Form befindet, in der ein mit einer Mehrzahl von Flügeln versehenes Flügelrad rotierend gelagert ist. Zum Zuführen und Abführen der Messflüssigkeit ist ein Einlass- und ein Auslassstutzen vorgesehen. Die Stutzen sind zwecks Verbindung mit der Flüssigkeitsleitung mit Schraubgewinden versehen.

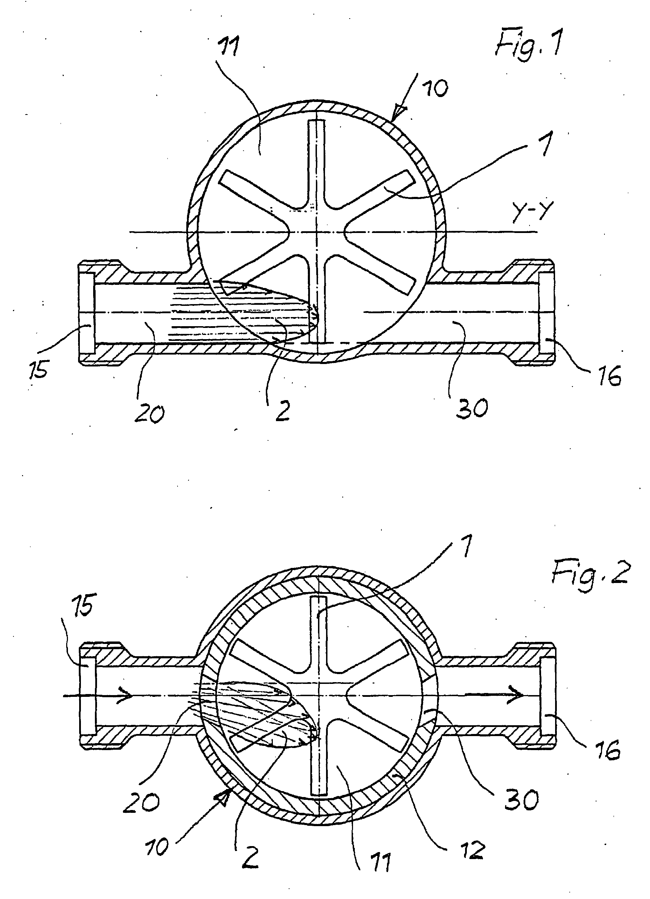

Der einfachste Typ Flüssigkeitszähler ist der Einstrahlzähler. Bei diesem wird die Messflüssigkeit in einem einzigen Strahl auf die Flügel des Flügelrades gelenkt. Die höchste Messempfindlichkeit bei kleinen Durchflüssen und den geringsten Druckabfall bei großen Durchflüssen haben die Einstrahlzähler, bei denen Einlass- und Auslassstutzen parallel zur Längsachse des Gehäuses orientiert und gleichzeitig so weit seitlich verschoben positioniert sind, dass der aus dem Einlassstutzen austretende Wasserstrahl genau tangential auf das Flügelrad im Bereich des äußeren Endes der Flügelpaletten trifft und auf kürzestem Weg in den Auslassstutzen eintritt. Man vergleiche Fig. 1. Dadurch überträgt die Messflüssigkeit den Bewegungsimpuls optimal auf das Flügelrad; gleichzeitig hat die Messflüssigkeit nur minimalen Kontakt mit dem Flügelrad, wodurch sich nur wenig Wirbel bilden, die das Flügelrad bremsen und den Druckabfall erhöhen. Allerdings ist diese exzentrische Anordnung der Einlass- und Auslassstutzen äußerst unpraktisch, da sie die Montage derartiger Zähler in einer Rohrleitung die an der Wand verlegt ist, erheblich behindert.

Aus diesem Grunde gibt es seit langem Verbrauchszähler, bei denen Einlass- und Auslassstutzen derart schräg ausgebildet sind, dass die Messflüssigkeit wieder tangential das Flügelrad treffen soll, während die Schraubgewinde genau auf der Mittellängsachse des Gehäuses positioniert sind. Man vergleiche die DE 197 27 150 A. Diese Zähler lassen sich zwar einfach montieren; sie besitzen jedoch eine geringere Messempfindlichkeit und vor allem einen höheren Druckverlust. Darüber hinaus haben diese Zähler notwendigerweise eine erhebliche Baulänge.

Um die Baulänge dieser Zähler verkürzen zu können, wurde die Umlenkung der Wasserströmung in das Gehäuseinnere verlegt. Dazu wurde die Messkammerwand deutlich dicker gewählt. In die Messkammerwand sind strömungslenkende, etwa tangential zum Flügelrad gerichtete Kanäle bzw. Schlitze eingearbeitet. Beim Einstrahlzähler gibt es in der verdickten Messkammerwand nur je einen Einlass- und einen Auslassschlitz. Man vergleiche Fig. 2 oder auch die DE 17 78 341 U. Diese Zählerkonstruktion baut zwar erheblich kürzer, besitzt jedoch nur eine geringe Messempfindlichkeit und einen hohen Druckabfall.

Nach dem eben beschriebenen Prinzip sind prinzipiell auch die Mehrstrahlzähler aufgebaut. Diese besitzen in der Messkammerwand eine Mehrzahl von Einlass- und Auslassschlitzen. Dadurch haben die Mehrstrahlzähler günstigere Eigenschaften als die zuletzt beschriebenen Einstrahlzähler.

Aus der EP 0 842 398 B ist ein Einstrahlzähler bekannt, der ein Metallgehäuse mit Einlass- und Auslassstutzen besitzt. Diese sind genau in der Mittellängsachse des Gehäuses positioniert. In das Metallgehäuse ist eine Messkammer eingesetzt. Diese besitzt eine Messkammerwand von erheblicher Dicke. In die Messkammerwand ist ein Einlasskanal und ein Auslasskanal eingeformt. Die Kanäle beginnen bzw. enden gegenüber dem Einlass- bzw. Auslassstutzen und sind etwa S-förmig geformt. Die Mündung ist so angeordnet, dass der Wasserstrahl zwar etwa tangential auf das Flügelrad trifft, dabei jedoch einen Winkel gegen die Längsachse des Gehäuses einnimmt. Auch derartige Zähler sind noch relativ messunempfindlich und haben einen erhöhten Druckabfall. Ein weiterer Nachteil ist die relativ große Baulänge dieses Zählers.

Der vorliegenden Erfindung liegt die Aufgabe zugrunde, einen Flüssigkeitszähler der eingangs genannten Art anzugeben, dessen Einlass- und Auslassstutzen in der Mittellängsachse des Gehäuses positioniert sind, der eine minimale Baulänge besitzt und eine maximale Messempfindlichkeit mit einem minimalen Druckabfall kombiniert.

Diese Aufgabe wird gelöst durch einen Flüssigkeitszähler mit den Merkmalen des Anspruchs 1.

Wesentliches Merkmal des erfindungsgemäßen Zählers ist die spezielle Form des Einlasskanals. Dieser beginnt bereits im Einlassstutzen und nicht erst im Messkammermantel. Dieses Merkmal ist für die minimale Baulänge verantwortlich. Für die hohe Messempfindlichkeit und den geringen Druckabfall verantwortlich ist das Merkmal, dass die Flüssigkeitsströmung im Einlasskanal vor ihrer Mündung in die Messkammer parallel zur Mittellängsachse des Gehäuses verläuft.

Von ganz besonderer Bedeutung ist jedoch das letzte kennzeichnende Merkmal. Durch diese Maßangabe wird sichergestellt, dass die Mündung des Einlasskanals in die Messkammer gegenüber dem Einlassstutzen so weit zur Seite versetzt ist, dass nur umgelenkte und dadurch gerichtete Flüssigkeit das Flügelrad im Bereich des äußeren Endes der Flügelpaletten trifft und dies auch nur mit einem schmalen, exakt gerichteten Strömungsprofil. Dies ist bei allen bisher bekannten Flüssigkeitszählern mit Ausnahme der Zähler mit gegenüber der Mittellängsachse seitlich verschobenen Ein- und Auslassstutzen nicht der Fall. Bei diesen Zählern kann aufgrund der Ausrichtung des Einlass- und gegebenenfalls Auslassschlitzes bzw. -kanals ein Teil der Messflüssigkeit auch ohne Umlenkung in die Messkammer eintreten, wo sie die Flügelpaletten des Flügelrades relativ achsnah trifft. Dieser Teil der Flüssigkeit erzeugt somit nur ein geringes Drehmoment, was die Messempfindlichkeit reduziert, und hat auch einen langen Kontakt mit dem Flügelrad, was den Druckabfall erhöht.

Gemäß einer vorteilhaften Weiterbildung der Erfindung fluchtet das zweite gerade Wandstück des Einlasskanals mit dem Außendurchmesser des Flügelrades. Auf diese Weise trifft die aus dem Einlasskanal in die Messkammer austretende Flüssigkeit die Flügelpaletten des Flügelrades in der maximal möglichen Entfernung von der Rotationsachse, wodurch auf das Flügelrad das höchste Drehmoment ausgeübt wird.

Bevorzugt ist der Auslasskanal spiegelbildlich zum Einlasskanal geformt. Auf diese Weise ist sichergestellt, dass die mit der speziellen Formgebung des Einlasskanals erreichten Vorteile sich auch im Auslasskanal einstellen.

Jeder Flügelradzähler besitzt eine Möglichkeit für eine werksseitige Regulierung. Erfindungsgemäß besteht diese aus einem Bypasskanal, der in die Messkammerwand eingeformt ist, und einem Regulierküken, welches den Querschnitt des Bypasskanals verändert.

Vorzugsweise bildet die Messkammerwand gleichzeitig die Gehäusewand. Dadurch lassen sich die Produktionszeiten und -kosten deutlich reduzieren.

Vorteilhafterweise besitzen Einlass- und Auslasskanal beginnend im Einlass- bzw. Auslassstutzen einen rechteckigen Querschnitt. Diese Form ist optimal angepasst an das Strömungsprofil für das Flügelrad.

Um eine hohe Messempfindlichkeit auch bei kleinsten Durchflüssen zu erreichen, empfiehlt es sich, die Mündung von Einlass- bzw. Auslasskanal in bzw. aus der Messkammer minimal schmal zu wählen, um durch eine Düsenwirkung die Fließgeschwindigkeit der Messflüssigkeit zu erhöhen. Es versteht sich, dass der dabei entstehende Druckabfall berücksichtigt werden muss, der durch die geltenden Normen begrenzt ist.

Gleichzeitig wird gemäß einer Weiterbildung der Erfindung die Mündung von Einlass- bzw. Auslasskanal in die bzw. aus der Messkammer auf die Höhe der Flügel des Flügelrades abgestimmt. Auch auf diese Weise ist sichergestellt, dass die gesamte Flüssigkeitsmenge das Flügelrad antreibt.

Eine bevorzugte Realisierung sieht vor, dass das Gehäuse einstückig aus Kunststoff gespritzt ist. Auf diese Weise lassen sich Gehäuse, Einlass- und Auslassstutzen, Einlass- und Auslasskanal, Flügelradlager, Regulierkanal und eventuelle hydraulische Einbauten in einem Arbeitsgang herstellen.

Bevorzugte Anwendung der Erfindung sind die Einstrahlzähler.

Anhand der Zeichnung soll die Erfindung in Form eines Ausführungsbeispiels näher erläutert werden. Es zeigen
- Fig. 1: rein schematisch einen Einstrahlzähler mit maximaler Messempfindlichkeit und minimalem Druckabfall nach dem Stand der Technik,
- Fig. 2: rein schematisch einen weiteren Einstrahlzähler nach dem Stand der Technik,
- Fig. 3: eine Seitenansicht eines Flüssigkeitszählergehäuses gemäß Erfindung,
- Fig. 4: einen Schnitt entlang der Linie IV-IV durch das Zählergehäuse der Fig. 3 und
- Fig. 5: eine Frontansicht des Zählergehäuses der Fig. 3 und 4.

Fig. 1 zeigt einen Einstrahfzähler nach dem Stand der Technik. In der Messkammer 11 eines Zählergehäuses 10 ist ein Flügelrad 1 drehbar gelagert. Die Messflüssigkeit wird der Messkammer 11 über einen Einlassstutzen 15 zugeführt und über einen Auslassstutzen 16 aus der Messkammer 11 abgeführt. Einlass- und Auslassstutzen 15, 16 sind gegen die Mittellängsachse y-y des Zählergehäuses 10 zur Seite versetzt. In Einlass- und Auslassstutzen 15, 16 sind ein Einlasskanal 20 und ein Auslasskanal 30 gebildet. Diese Kanäle 20, 30 verlaufen im wesentlichen parallel zur Mittellängsachse y-y des Gehäuses 10 und besitzen einen kreisförmigen Querschnitt. Dadurch trifft das aus dem Einlasskanal 20 in die Messkammer 11 austretende Flüssigkeitsprofil 2 die Flügelspitzen des Flügelrades 1 im wesentlichen im rechten Winkel bzw. das Flügelrad 1 tangential, welches auf diese Weise mit maximalem Drehmoment angetrieben wird und so seine optimale Messempfindlichkeit erreicht. Sobald die Messflüssigkeit ihren Impuls auf das Flügelrad 1 abgegeben hat, wird sie vom Auslasskanal 30 aufgenommen. Dadurch ist der Kontakt zwischen Messflüssigkeit 2 und Flügelrad 1 minimal kurz und es entsteht auch bei großen Durchflüssen nur ein minimaler Druckabfall.

Da aufgrund der asymmetrischen Anordnung von Einlass- und Auslassstutzen 15, 16 die in Fig. 1 dargestellten Zähler wie eingangs beschrieben nicht überall montiert werden können, wurden Zählergehäuse konstruiert, bei denen Einlass- und Auslassstutzen 15, 16 in der Mittellängsachse y-y des Zählergehäuses 10 positioniert sind. Dies ist in Fig. 2 dargestellt. Diese Zähler besitzen im Gehäuse 10 eingesetzt eine Messkammer 11 mit einer relativ starken Messkammerwand 12, in die ein Einlass- und ein Auslasskanal 20, 30 eingeformt sind. Einlass- und Auslasskanal 20, 30 sind gegenüber der Mittellängsachse y-y angewinkelt, um eine einigermaßen tangentiale Anströmung des Flügelrades 1 zu erreichen. Aufgrund seiner Kürze hat der Einlasskanal 20 jedoch nur eine minimale strömungslenkende Wirkung. Es ergibt sich ein sehr breites Strömungsprofil 2, welches die Flügel des Flügelrades 1 unter einem ungünstigen Winkel und vor allem relativ achsnah beaufschlagt. Dadurch entwickelt das Flügelrad 1 nur eine geringe Messempfindlichkeit. Aufgrund des langen Weges vom Einlasskanal 20 zum Auslasskanal 30 entstehen in der Messkammer 11 erhebliche Wirbel, die den Druckabfall bei großen Durchflüssen erhöhen.

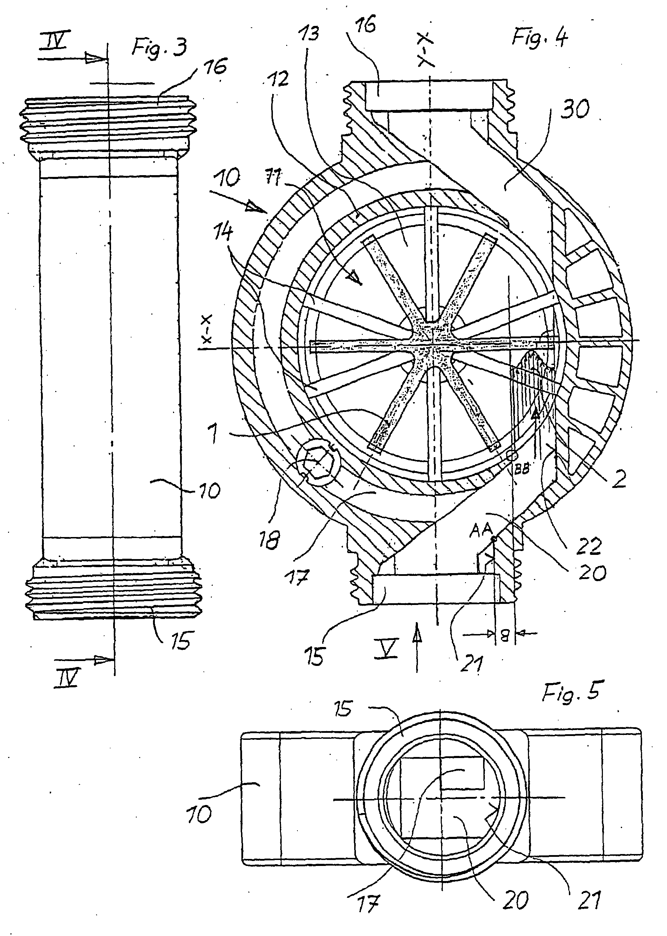

Die Fig. 3, 4 und 5 zeigen als Seitenansicht, Schnitt bzw. Frontansicht ein einstückig aus Kunststoff gespritztes Zählergehäuse 10 nach der Erfindung. Einlass- und Auslassstutzen 15, 16 sind in der Mittellängsachse y-y des Gehäuses 10 positioniert. Die Messkammerwand 12 bildet gleichzeitig die Gehäusewand. Am Boden 13 der Messkammer 11 sind gleichzeitig mit der Herstellung des Gehäuses 10 Staurippen 14 angeformt, die in an sich bekannter Weise die Messkurve des Flügelrads 1 linearisieren. Außerdem ist in die Messkammerwand 12 ein Regulierkanal 17 eingeformt, dessen Querschnitt mit Hilfe eines Regulierkükens 18 verändert werden kann.

Der Einlasskanal 20 beginnt bereits im Einlassstutzen 15. Er besitzt auf der in der Zeichnung unteren Seite ein erstes gerades Wandstück 21, welches an einer ersten Kante A-A endet. Dieselbe, in der Zeichnung untere Seite des Einlasskanals 20 bildet vor der Einmündung in die Messkammer 11 ein zweites ebenfalls gerades Wandstück 22, das parallel zur Mittellängsachse y-y verläuft. An der dem zweiten geraden Wandstück 22 gegenüberliegenden Seite des Eintasskanals 20 ist an der Einmündung in die Messkammer 11 eine zweite Kante B-B gebildet.

Wird nun das Maß B, gebildet aus der Differenz des Abstandes der zweiten Kante B-B zur Mittellängsachse y-y und des Abstandes der ersten Kante A-A zur Mittellängsachse y-y gleich oder größer Null gemacht, so ist sichergestellt, dass auch nicht ein minimaler Anteil der Messflüssigkeit, die in den Einlassstutzen 15 einströmt, die Messkammer 11 ohne Umlenkung erreichen kann. Nur auf diese Weise kann sichergestellt werden, dass die gesamte Messflüssigkeit, dargestellt durch das Strömungsprofil 2, als schmaler, exakt gerichteter Flüssigkeitsstrahl auf das Flügelrad 1 im Bereich des äußeren Endes der Flügelpaletten trifft. Damit wird auch bei kleinen Durchflüssen bereits ein maximales Drehmoment erzeugt, welches für die maximale Messempfindlichkeit verantwortlich ist.

Ist wie in Fig. 4 dargestellt der Auslasskanal 30 in Bezug auf die Querachse x-x des Zählergehäuses 10 spiegelbildlich zum Einlasskanal 20 ausgebildet, so kann die Messflüssigkeit die Messkammer 11 auf dem kürzesten Weg wieder verlassen, wodurch sich auch bei großen Durchflüssen nur ein minimaler Druckabfall einstellt.

Messempfindlichkeit und Druckabfall des in den Fig. 3, 4 und 5 dargestellten erfindungsgemäßen Einstrahlzählers entsprechen denen des in der Fig. 1 dargestellten Flüssigkeitszählers, wobei jedoch Einlass- und Auslassstutzen in der Mittellängsachse des Gehäuses liegen und der Zähler insgesamt eine minimale Baulänge besitzt.

## Patentansprüche

1. Einstrahlzähler für Flüssigkeiten, im Wesentlichen umfassend die Merkmale:
- ein Flügelrad (1) mit Flügelpaletten,
- ein Gehäuse (10) mit
― einer Messkammer (11) mit einer Messkammerwand (12),
― einem Einlassstutzen (15),
― einem Auslassstutzen (16),
― einem Einlasskanal (20) vom Einlassstutzen (15) in die Messkammer (11)
― und einem Auslasskanal (30) aus der Messkammer (11) zum Auslassstutzen (16),
- der Einlasskanal (20)
― beginnt im Einlassstutzen (15),
― besitzt einerseits ein im Einlassstutzen (15) beginnendes erstes gerades Wandstück (21), welches an einer ersten Kante (AA) endet,
― mündet einerseits mit einem zweiten geraden Wandstück (22) in die Messkammer (11),
― mündet andererseits an einer zweiten Kante (BB) in die Messkammer (11), und
― lenkt Messflüssigkeit tangential auf die Flügelpaletten des Flügelrads (1),
- die Anschlüsse von Einlass- und Auslassstutzen (15, 16) sitzen auf der Mittellängsachse (y-y) des Gehäuses (10),
und **gekennzeichnet durch** die Merkmale:
- das zweite gerade Wandstück (22) ist etwa parallel zur Mittellängsachse (y-y) gerichtet,
- das Maß (B), gebildet aus der Differenz des Abstandes der zweiten Kante B-B zur Mittellängsachse y-y einerseits und des Abstandes der ersten Kante A-A zur Mittellängsachse y-y andererseits ist gleich oder größer Null.

2. Einstrahlzähler nach Anspruch 1, **gekennzeichnet durch** das Merkmal:
- das zweite gerade Wandstück (22) tangiert mit dem Außendurchmesser des Flügelrades (1).

3. Einstrahlzähler nach einem der Ansprüche 1 oder 2, **gekennzeichnet durch** das Merkmal:
- die Messkammerwand (12) bildet gleichzeitig die Gehäusewand.

4. Einstrahlzähler nach einem der Ansprüche 1 bis 3, **gekennzeichnet durch** das Merkmal:
- der Einlasskanal (20) besitzt einen rechteckigen Querschnitt.

5. Einstrahlzähler nach einem der Ansprüche 1 bis 4, **gekennzeichnet durch** das Merkmal:
- die Mündung des Einlasskanals (20) in die bzw. des Auslasskanals (30) aus der Messkammer (11) ist unter Berücksichtigung des entstehenden Druckabfalls minimal schmal.

6. Einstrahlzähler nach einem der Ansprüche 1 bis 5, **gekennzeichnet durch** das Merkmal:
- die Höhe der Mündung des Einlasskanals (20) in die bzw. des Auslasskanals (30) aus der Messkammer (11) ist auf die Höhe der Flügelpaletten des Flügelrades (1) abgestimmt.

7. Einstrahlzähler nach einem der Ansprüche 1 bis 6, **gekennzeichnet durch** das Merkmal:
- der Auslasskanal (30) ist spiegelbildlich zum Einlasskanal (20) geformt.

8. Einstrahlzähler nach einem der Ansprüche 1 bis 7, **gekennzeichnet durch** das Merkmal:
- das Gehäuse (10) ist einstückig aus Kunststoff gespritzt.

9. Einstrahlzähler nach einem der Ansprüche 1 bis 8, **gekennzeichnet durch** das Merkmal:
- Einlass- und Auslasskanal (20, 30) sind jeweils einstückig in das Gehäuse (10) eingeformt.

10. Einstrahlzähler nach einem der Ansprüche 1 bis 9, **gekennzeichnet durch** die Merkmale:
- es ist eine Regulierung vorgesehen, bestehend aus
― einem Bypasskanal (17), eingeformt in die Messkammerwand (12),
― und einem Regulierküken (18).
